# EUROPÄISCHE PATENTANMELDUNG

(11) **EP 1 705 072 A2**
(43) Veröffentlichungstag der Anmeldung: **27.09.2006**
(21) Anmeldenummer: 06004182.9
(22) Anmeldetag: 02.03.2006
(51) Int. Cl.: B60R 21/13

(54) **Überrollschutzsystem**

(30) Priorität: 23.03.2005 DE 102005013377
(71) Anmelder: Bayerische Motorenwerke Aktiengesellschaft, 80809 München (DE)
(72) Erfinder: Eltrop, Raphael, 80805 München (DE)

(57) **Zusammenfassung**

Ein Überrollschutzsystem für ein oben offenes Fahrzeug weist eine Verriegelungseinrichtung für einen Überrollbügel (1) auf, mit einer Sperrklinke (11), die sich zumindest teilweise unterhalb eines Querträgers (10) des Fahrzeugs befindet. Durch die tiefe Anordnung der Sperrklinke (11) am Querträger (10) kann die Zahnleiste (4) der Verriegelungseinrichtung so kurz ausgeführt werden, dass sie auch in der obersten Wirklage des Überrollbügels (1) innerhalb des Querschnittes des Querträgers (10) bleibt. Hierdurch ist keine Öffnung in der oberen Begrenzungswand (19b) des Querträgers (10) mehr erforderlich, woraus sich Vorteile hinsichtlich der Steifigkeit des Querträgers (10) ergeben.

## Beschreibung

Die Erfindung betrifft ein Überrollschutzsystem nach dem Oberbegriff des Anspruchs 1.

Ein derartiges Überrollschutzsystem ist beispielsweise aus der DE 102 19 447 A1 bekannt. Hierbei weist die Verriegelungseinrichtung zur Arretierung des ausgefahrenen Überrollbügels eine mit dem Überrollbügel starr verbundene, langgestreckte Rasteinrichtung auf, die mit einer querträgerseitigen Sperrklinke zusammenwirkt. Wie insbesondere aus Fig. 1 der DE 102 19 447 A1 hervorgeht, ragt die Rasteinrichtung in der ausgefahrenen Wirkstellung des Überrollbügels über den Querschnitt des Querträgers hinaus.

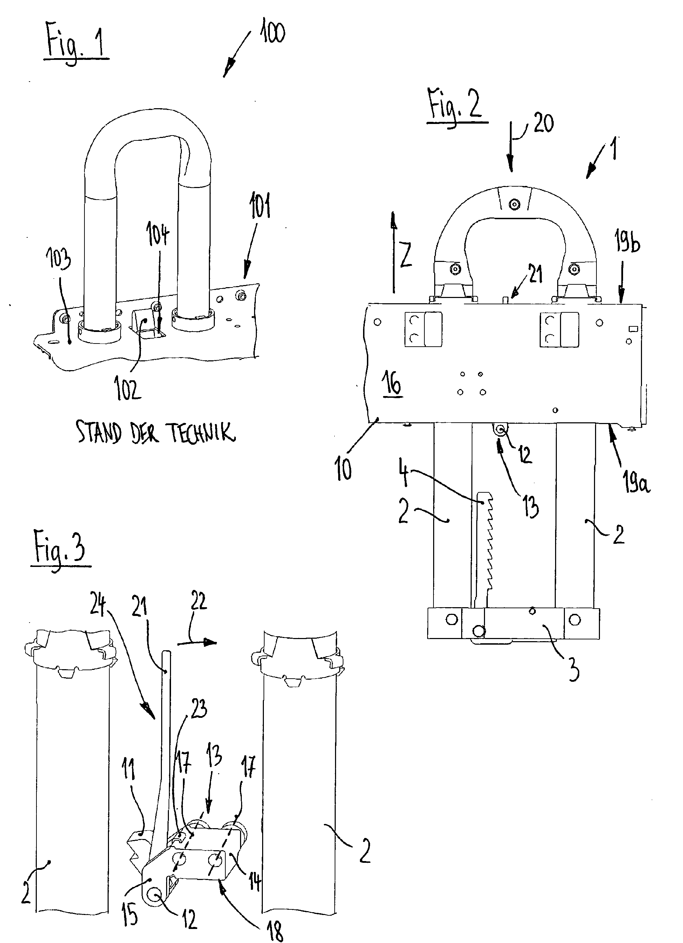

Fig. 1, die einen Ausschnitt eines vergleichbaren Überrollschutzsystems nach dem Stand der Technik darstellt, verdeutlicht die sich hieraus ergebende Problematik. Da die Rasteinrichtung 102 im ausgefahrenen Zustand des Überrollbügels 100 über den Querschnitt des Querträgers 101 hinausragt, ist an der Oberseite 103 des Querträgers 101 eine fensterförmige Durchtrittsöffnung 104 vorzusehen. Die Öffnung 104 schwächt jedoch den Querträger 101, so dass dieser zum Ausgleich anderweitig stärker dimensioniert werden muss. Eine größere Höhenerstreckung des Querträger 101 wird jedoch nach oben durch die Gürtellinie des Fahrzeugs und nach unten durch die Forderung einer Durchlademöglichkeit unterhalb des Querträgers 101 begrenzt.

Aufgabe der Erfindung ist es, das bekannte Überrollschutzsystem für ein oben offenes Fahrzeug weiterzuentwickeln.

Diese Aufgabe wird durch ein Überrollschutzsystem mit den Merkmalen des Anspruchs 1 gelöst.

Kerngedanke der Erfindung nach Anspruch 1 ist es hierbei, die Überrollschutzeinrichtung so auszubilden, dass "die Sperrklinke der Rasteinrichtung nach unten entgegenkommt", so dass die Rasteinrichtung in ihrer Erstreckung in Ausfahrrichtung kürzer bemessen werden kann. Hierdurch wird es möglich, die Höhenerstreckung der Rasteinrichtung so weit zu reduzieren, dass ein fensterartiger Ausschnitt an der Oberseite des Querträgers nicht mehr erforderlich ist, da die Rasteinrichtung nicht mehr durch die Oberseite des Querträgers hindurchtritt. Hierdurch wird die Steifigkeit des Querträgers erhöht. Somit kann der Querträger bei dem erfindungsgemäßen Überrollschutzsystem im Vergleich zu einem Überrollschutzsystem nach dem Stand der Technik kleiner und/oder dünnwandiger dimensioniert werden, mit Vorteilen hinsichtlich der Herstellkosten und des Gewichtes.

Bevorzugt ist die Sperrklinke so anzuordnen, dass sie sich zumindest teilweise unterhalb des Querträgers erstreckt.

In einer bevorzugten Ausführung der Erfindung liegt die Drehachse der Sperrklinke unterhalb des Querträgers, so dass die oben beschriebenen Vorteile in besonders effektiver Weise erzielt werden.

Weitere vorteilhafte Ausgestaltungen der Erfindung sind Gegenstand der Unteransprüche.

Ein mögliches Ausführungsbeispiel der Erfindung ist in der Zeichnung dargestellt und wird nachfolgend näher erläutert. Es zeigt:
- Fig. 1: eine perspektivische Teilansicht auf ein Überrollschutzsystem nach dem Stand der Technik,
- Fig. 2: eine Ansicht auf die Rückseite eines erfindungsgemäßen Überrollschutzsystems, mit einem Überrollbügel in seiner abgesenkten Ausgangsposition,
- Fig. 3: eine vergrößerte Darstellung des Gegenstands von Fig. 2, unter Weglassung des Querträgers,
- Fig. 4: eine perspektivische Darstellung einer Sperrklinke mit einem nach unten abragenden Entriegelungshebel,
- Fig. 5: eine perspektivische Teilansicht auf ein Überrollschutzsystem mit einem Entriegelungshebel gemäß Fig. 4,
- Fig. 6: eine perspektivische Darstellung einer Sperrklinke mit einem seitlich abragenden Entriegelungshebel und
- Fig. 7: eine perspektivische Teilansicht auf ein Überrollschutzsystem mit einem Entriegelungshebel gemäß Fig. 6.

Die Fig. 2 und 3 zeigen ein erfindungsgemäßes Überrollschutzsystem eines oben offenen Fahrzeugs, mit einem Überrollbügel 1, dessen Schenkel 2 in einem quer zur Fahrtrichtung verlaufenden Querträger 10 translatorisch geführt sind. Der Querträger 10 ist als geschlossenes Hohlprofil mit einem etwa rechteckförmigen Querschnitt ausgebildet. Fig. 2 zeigt den rechten Überrollbügel 1, in der Ansicht in Fahrtrichtung, so dass die hintere Seitenwand 16 des Querträgers 10 sichtbar ist. Das Überrollschutzsystem ist an der nicht dargestellten linken Seite des Fahrzeugs spiegelbildlich aufgebaut.

Zur Arretierung des Überrollbügels 1 in seiner ausgefahrenen Wirklage ist eine Verriegelungseinrichtung vorgesehen, die sich aus einer überrollbügelseitigen, langgestreckten Rasteinrichtung in Form einer Zahnleiste 4 sowie einer querträgerseitigen Sperrklinke 11 zusammensetzt.

Die Sperrklinke 11 ist hierbei so am Querträger 10 angeordnet, dass sie sich mit einem Teil ihrer Höhenerstreckung unterhalb des Querträgers 10 befindet. Im vorliegenden Ausführungsbeispiel ist die Sperrklinke 11 so in einem Lagerbock 13 gelagert, dass die Drehachse 12 der Sperrklinke 11 unterhalb des Querträgers 10 liegt. Durch diese, auf die Ausfahrrichtung Z des Überrollbügels 1 bezogen, tiefe Anordnung der Sperrklinke 11 gegenüber dem Querträger 10 wird erreicht, dass das Gegenstück der Verriegelungseinrichtung, die Zahnleiste 4, vergleichsweise kurz ausgebildet werden kann. Die Zahnleiste 4, die an einer Traverse 3 am freien Endabschnitt der Schenkel 2 des Überrollbügels 1 angeordnet ist, bleibt damit auch in der maximal nach oben ausgefahrenen Wirklage des Überrollbügels 1 innerhalb des Querschnittes des Querträgers 10. Somit ist eine Durchtrittsöffnung 104, wie nach dem Stand der Technik gemäß Fig. 1 erforderlich, bei der erfindungsgemäßen Ausgestaltung eines Überrollschutzsystems, nicht notwendig. Damit wird eine Schwächung des Querschnitts des Querträgers 10 vermieden, mit Vorteilen hinsichtlich der Steifigkeit des Querträgers 10.

Durch die geschlossene obere Begrenzungswand 19b des Querträgers 10 (ohne Durchtrittsöffnung 104 gemäß dem Stand der Technik) ergibt sich bei der erfindungsgemäßen Lösung als weiterer Vorteil, dass Schmutz und Kleinteile nicht mehr in den Bereich der Verriegelungseinrichtung eingebracht werden können. Hieraus resultiert eine große Betriebssicherheit der Verriegelungseinrichtung.

Der Lagerbock 13 liegt mit seiner Unterseite 18 an der Innenseite der unteren Begrenzungswand 19a des Querträgers 10 an. Die Befestigung des Lagerbockes 13 erfolgt über zwei Schrauben 17, die durch die vordere Seitenwand des Querträgers 10 hindurchgeführt sind. Der Lagerbock 13 selbst ist in etwa L-förmig ausgeführt, wobei sein erster Schenkel 14 parallel zur unteren Begrenzungswand 19a des Querträgers 10 verläuft. Mit der Unterseite 18 dieses ersten Schenkels 14 liegt der Lagerbock 13 an der Innenseite der unteren Begrenzungswand 19a des Querträgers 10 flächig an. Der zweite Schenkel 15 des L-förmigen Lagerbockes 13 ragt durch eine Öffnung in der unteren Begrenzungswand 19a des Querträgers 10 nach unten aus diesem heraus. Am freien Endabschnitt des zweiten Schenkels 15 ist die Drehachse 12 der Sperrklinke 11 angeordnet. Da bei Krafteinwirkung auf den ausgefahrenen Überrollbügel 1 in Richtung des Pfeils 20 (siehe Fig. 2) der Lagerbock 13 sich mit seinem ersten Schenkel 14 an der unteren Begrenzungswand 19a des Querträgers 10 flächig abstützt, haben die beiden Schrauben 17 lediglich die Aufgabe, den Lagerbock 13 in seiner Position zu sichern. Die Schrauben 17 liegen somit nicht im Kraftfluss, mit Vorteilen hinsichtlich der Dimensionierung der Befestigung.

Bei in der Praxis ausgeführten Überrollschutzsystemen liegt der Lagerbock 13 aus Toleranzgründen im unbelasteten Zustand nicht an der Innenseite der unteren Begrenzungswand 19a des Querträgers 10 an. Vielmehr ist zwischen der Unterseite 18 des ersten Schenkels 14 des Lagerbocks 13 und der Innenseite der unteren Begrenzungswand 19a des Querträgers 10 wegen Fertigungstoleranzen ein kleiner Spalt vorgesehen. Unter Belastung, also im Fall eines Überschlages bei ausgefahrenem Überrollbügel 1, kommt es jedoch - wie oben beschrieben - zur flächigen Anlage.

Um den Überrollbügel 1 aus seiner ausgefahrenen Wirklage in die abgesenkte Ausgangsposition zurückbewegen zu können, ist ein Entriegelungshebel 24 vorgesehen. Durch Verschwenken des Entriegelungshebels 24 gemäß der Richtung des Pfeils 22 wird die Sperrklinke 11 außer Eingriff mit der Zahnleiste 4 gebracht. Bevorzugt ist der Entriegelungshebel 24, der nur sehr geringe Kräfte zu übertragen hat, als Blechbauteil mit relativ geringem Querschnitt ausgeführt, woraus sich ein geringes Gewicht und niedrige Herstellkosten ergeben. Alternativ kann der Entriegelungshebel 24 beispielsweise auch aus Kunststoff hergestellt sein.

Um eine einfache Betätigung des Entriegelungshebels 24 zu erreichen, ist der Entriegelungshebel 24 mit seinem oberen Endabschnitt 21 durch eine Öffnung in der oberen Begrenzungswand 19b des Querträgers 10 hindurchgeführt. Aufgrund der kleinen Abmessungen des Entriegelungshebels 24 kann die Öffnung in der oberen Begrenzungswand 19b des Querträgers 10 so klein ausgeführt, dass sie keine nennenswerte Schwächung des Profils des Querträgers 10 verursacht. Eine Feder 23 bewirkt hierbei, dass der Entriegelungshebel 24 grundsätzlich in Eingriff mit der Verzahnung der Zahnleiste 4 steht.

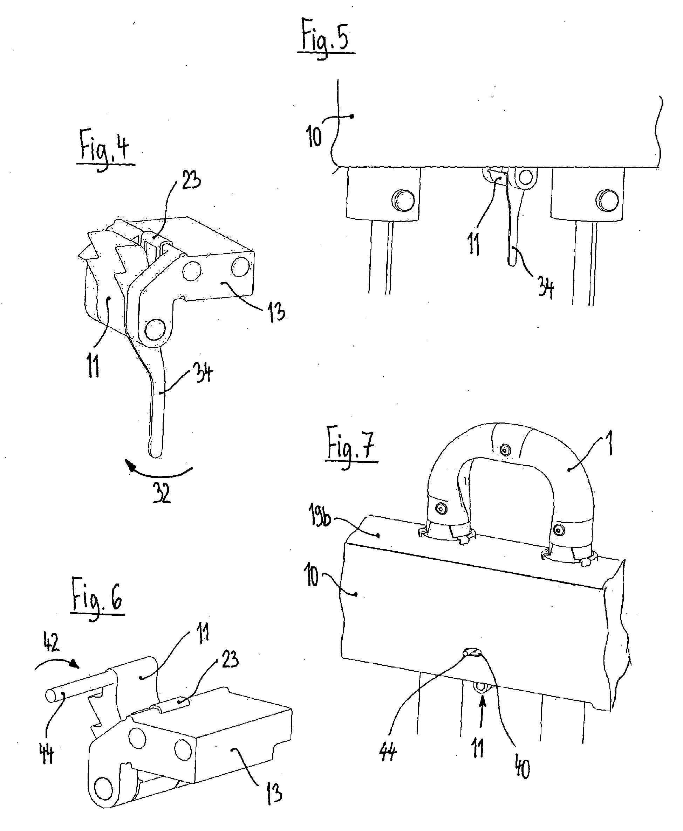

Die Fig. 4 und 5 sowie 6 und 7 zeigen alternative Ausführungsformen von Entriegelungshebeln 34 und 44, die so angeordnet und ausgebildet sind, dass auch auf die kleine Zugangsöffnung in der oberen Begrenzungswand 19b des Querträgers (siehe Fig. 2 und 3) verzichtet werden kann. Hierdurch wird eine weitere Erhöhung der Steifigkeit des Querträgers 10 erzielt.

Gemäß Fig. 4 ist an der Sperrklinke 11 ein nach unten abstehender Entriegelungshebel 34 angeordnet. Durch Verschwenken des Entriegelungshebels 34 in Richtung des Pfeils 32 entgegen der Kraft der am Lagerbock 13 angeordneten Feder 23 wird die Sperrklinke 11 außer Eingriff mit der Zahnleiste 4 gebracht. Entsprechend dem Ausführungsbeispiel der Fig. 2 und 3 kann der Entriegelungshebel 34 als Blech- oder Kunststoffbauteil mit geringer Wandstärke ausgeführt sein. Alternativ ist eine einstückige Ausführung mit der Sperrklinke 11 möglich. Wie aus Fig. 5 hervorgeht, ist der Entriegelungshebel 34 mit geringer Länge ausgeführt, da er nur kleine Kräfte zu übertragen hat und in gut zugänglicher Weise nach unten vom Querträger 10 abragt. In vorteilhafter Weise befindet sich dabei die Durchtrittsöffnung für den Entriegelungshebel 34 in einem Bereich, in dem wegen des Durchtritts der Zahnleiste 4 sowieso eine Öffnung vorhanden ist.

Beim Ausführungsbeispiel nach Fig. 6 ist ein seitlich von der Sperrklinke 11 abstehender Entriegelungshebel 44 vorgesehen, der bevorzugt einstückig an die Sperrklinke 11 angeformt ist. Wie aus Fig. 7 hervorgeht, ragt der Entriegelungshebel 44 in der Einbaulage des Überrollschutzsystems im Fahrzeug durch eine bogenförmige Öffnung 40 in der hinteren Seitenwand 16 des Querträgers 10 hindurch und kann somit in einfacher Weise von außen betätigt werden. Durch Verschwenken des Entriegelungshebels 44 in Richtung des Pfeils 42 wird auch hier entgegen der Kraft der am Lagerbock 13 angeordneten Feder 23 die Sperrklinke 11 außer Eingriff mit der Zahnleiste 4 gebracht. Selbstverständlich kann der Entriegelungshebel 44 auch durch eine Öffnung in der vorderen Begrenzungswand des Querträgers 10 hindurch geführt sein.

Zusammenfassend ist festzustellen, dass durch die "stehende Anordnung" einer Zahnleiste 4 an der Traverse 3 eines Überrollbügels 1 in Verbindung mit einer - in Bezug auf den Querträger 10 - möglichst tief angeordneten Sperrklinke 11 der Überlappungsbereich zwischen Zahnleiste 4 und Sperrklinke 11 erfindungsgemäß so weit nach unten verlagert werden kann, dass auch in der voll ausgefahrenen Position des Überrollbügels 1 der obere Endabschnitt der Zahnleiste 4 innerhalb des Querschnitts des Querträgers 10 bleibt und somit auf eine schwächende Durchtrittsöffnung in der oberen Begrenzungswand 19b des Querträgers 10 verzichtet werden kann.

## Patentansprüche

1. Überrollschutzsystem für ein oben offenes Fahrzeug, mit wenigstens einem aus einer abgesenkten Ausgangsposition in eine ausgefahrene Wirkstellung verlagerbaren Überrollbügel, der an einem Querträger des Fahrzeugs angeordnet ist, mit einer Verriegelungseinrichtung zur Arretierung des ausgefahrenen Überrollbügels, wobei die Verriegelungseinrichtung eine am Überrollbügel angeordnete, langgestreckte Rasteinrichtung sowie eine am Querträger angeordnete Sperrklinke aufweist,
**dadurch gekennzeichnet, dass** - in Bezug auf den Querträger (10) in seiner Einbaulage im Fahrzeug - die Sperrklinke (11) so tief angeordnet ist, dass in der ausgefahrenen Wirkstellung des Überrollbügels (1) die Zahnleiste (4) innerhalb des Querschnitts des Querträgers (10) verbleibt.

2. Überrollschutzsystem nach Anspruch 1,
**dadurch gekennzeichnet, dass** die Sperrklinke (11) in ihrer Einbaulage im Fahrzeug zumindest teilweise unterhalb des Querträgers (10) angeordnet ist.

3. Überrollschutzsystem nach Anspruch 1 oder 2,
**dadurch gekennzeichnet, dass** die Drehachse (12) der Sperrklinke (11) unterhalb des Querträgers (10) angeordnet ist.

4. Überrollschutzsystem nach einem der vorgenannten Ansprüche,
**dadurch gekennzeichnet, dass** die Sperrklinke (11) in einem etwa L-förmigen Lagerbock (13) aufgenommen ist, mit einem in Einbaulage im Fahrzeug etwa parallel zu einer unteren Begrenzungswand (19a) des Querträgers (10) verlaufenden ersten Schenkel (14) und einem in Einbaulage im Fahrzeug nach unten vom Querträger (10) abstehenden zweiten Schenkel (15), der die Drehachse (12) aufnimmt.

5. Überrollschutzsystem nach Anspruch 4,
**dadurch gekennzeichnet, dass** der erste Schenkel (14) des Lagerbocks (13) in seiner Einbaulage im Fahrzeug an der Innenseite der unteren Begrenzungswand (19a) des Querträgers (10) anliegt.

6. Überrollschutzsystem nach Anspruch 4 oder 5,
**dadurch gekennzeichnet, dass** der Lagerbock (13) über eine in Einbaulage im Fahrzeug etwa horizontal verlaufende Verschraubung (17) an einer Seitenwand des Querträgers (10) befestigt ist.

7. Überrollschutzsystem nach einem der vorgenannten Ansprüche, mit einer Entriegelungseinrichtung, durch die der Eingriff der Sperrklinke in die Rasteinrichtung aufgehoben werden kann,
**dadurch gekennzeichnet, dass** die Entriegelungseinrichtung einen Entriegelungshebel (24) aufweist, der - in Bezug auf die Einbaulage im Fahrzeug - entlang der Höhenerstreckung des Querträgers (10) verläuft und durch eine Öffnung in der oberen Begrenzungswand (19b) des Querträgers (10) hindurchgeführt ist.

8. Überrollschutzsystem nach einem der Ansprüche 1 bis 6, mit einer Entriegelungseinrichtung, durch die der Eingriff der Sperrklinke in die Rasteinrichtung aufgehoben werden kann,
**dadurch gekennzeichnet, dass** die Entriegelungseinrichtung einen Entriegelungshebel (34) aufweist, der - in Bezug auf die Einbaulage im Fahrzeug - nach unten von der Sperrklinke (11) absteht.

9. Überrollschutzsystem nach einem der Ansprüche 1 bis 6, mit einer Entriegelungseinrichtung, durch die der Eingriff der Sperrklinke in die Rasteinrichtung aufgehoben werden kann,
**dadurch gekennzeichnet, dass** die Entriegelungseinrichtung einen Entriegelungshebel (44) aufweist, der - in Bezug auf die Einbaulage im Fahrzeug - seitlich von der Sperrklinke (11) absteht und durch eine Öffnung (40) in einer vorderen oder hinteren Begrenzungswand (16) des Querträgers durchgeführt ist.

10. Überrollschutzsystem nach einem der Ansprüche 7 bis 9,
**dadurch gekennzeichnet, dass** der Entriegelungshebel (24) als Blechbauteil ausgeführt ist.
